**Europäisches Patentamt**

**European Patent Office**

**Office européen des brevets**

(19)

(11) Publication number: **0 067 057**
**A2**

(12)

# EUROPEAN PATENT APPLICATION

(21) Application number: **82302908.7**

(22) Date of filing: **04.06.82**

(51) Int. Cl.³: **G 06 F 15/336**

(30) Priority: **04.06.81 US 270479**

(43) Date of publication of application: **15.12.82**
**Bulletin 82/50**

(84) Designated Contracting States: **DE FR GB IT**

(71) Applicant: **Edwards, Darrel, 10362 Carioca Court, San Diego California 92124 (US)**
Applicant: **Johnson, Janet Susan, 4365 Cartulina Road, San Diego California 92124 (US)**

(72) Inventor: **Edwards, Darrel, 10362 Carioca Court, San Diego California 92124 (US)**
Inventor: **Johnson, Janet Susan, 4365 Cartulina Road, San Diego California 92124 (US)**

(74) Representative: **Orchard, Oliver John, JOHN ORCHARD & CO. Staple Inn Buildings North High Holborn, London WC1V 7PZ (GB)**

(54) **Apparatus for determining relationships between elements in accordance with shared attributes.**

(57) An attribute matrix AM is filled from an input device I/P with a table indicating, for each of a plurality of elements, which of a set of attributes that element possesses. From this table, a match is calculated for every distinct pair of elements, giving the number of attributes (presence or absence) shared by the two elements, and the matches are stored in a match matrix MM. For each pair of elements, a correlation value is then calculated from the match matrix, giving the degree to which the corresponding two columns (or rows) of the match matrix are correlated, and stored in a correlation matrix CM. The two elements with the highest correlation are then combined, and the alternate calculation of a fresh match matrix and the associated correlation matrix continued until only two collapsed elements remain. The results are stored in a result list store RLIST, and an output matrix is then generated in a matrix store OM. The contents of the OM are then displayed, in a tree form showing the successive combination, by an output device O/P.

ACTORUM AG

"Apparatus for determining relationships between elements in accordance with shared attributes".

The present invention relates to apparatus for processing data representing relationships between a plurality of elements, each element having one or more of a set of attributes common to the set of elements.

- The grid-matching method has long been used as a means for sorting elements in accordance to their observable attributes or characteristics. For example, vestiges unearthed at a particular site in the course of archaeological diggings may be entered on a grid pattern or matrix which has as values of one coordinate the various attributes such as colours, materials, shapes, etc., exhibited by the items found. Coincidences of attributes between various items might be useful in gathering together various dispersed fragments of a single pottery piece or the pieces of a particular skeleton.

The grid method has also been applied to the analysis of abstract concepts, such as clues from criminal investigations, and in identifying analogies between clinical observations in the field of medical research.

The grid method has also been found most useful in classifying and sorting options available in a decision-making process.

In the analysis of human behaviour through psychological and psychiatric examination, the interpretation of clinical and field observations presents a most difficult task in view of the infinite diversity of human reactions among several subjects exposed to a particular situation. George Alexander KELLY in his PSYCHOLOGY OF PERSONAL CONSTRUCTS (1955) has suggested the use of "constructs" as test elements setting forth behavioural dichotomies such as likes and dislikes, similarities and differences etc., in order to define the structure of a subject's intellectual functioning. This method is only valid if a thorough charting of all relationships between the answers or results of the analysis can be drawn. Manipulation of the results by means of conventional grid method can only discover the strongest or most obvious relationships. A more thorough probing of the data to a level which is beyond the capacity of the best trained human mind is necessary to elucidate and quantify the more subtle correlations and to derive an orderly classification of all relationships.

An object of the present invention is to provide apparatus by means of which such more detailed classification of the relationships between the elements, in accordance with the attributes shared by them, may be made.

Accordingly, the present invention is characterised by the apparatus defined in claim 1.

Apparatus in accordance with the invention, together with the manner by which the data is processed by the apparatus, will now be described, by way of example, with reference to the accompanying drawings, in which:-

Figure 1 illustrates the cross-relationships between some elements and their shared attributes;

Figure 2 illustrates the process of computing the similarity index between two elements;

Figure 3 is the similarity index matrix for elements shown in Figure 1;

Figure 4 is the intercolumnar correlation matrix computed from the data in Figure 3;

Figure 5 is a collapsed similarity index matrix obtained by clustering the two most closely correlated elements;

Figure 6 is a map illustrating the correlating profile between the elements;

Figure 7A is a block diagram of one embodiment of apparatus according to the invention;

Figure 7B is a general flow diagram of the data processing;

Figure 7C is a block diagram of a second embodiment of apparatus according to the invention;

Figures 8 to 11 show the data generated at various stages by the embodiments of Figures 7A and 7C; and

Figure 12 shows further data generated.

The apparatus will be most easily understood if the abstract data manipulations which the apparatus is to perform are considered first.

The present invention has various applications in vastly different fields of human endeavours. Accordingly, the preferred implementation described here represents only one among many possible implementations.

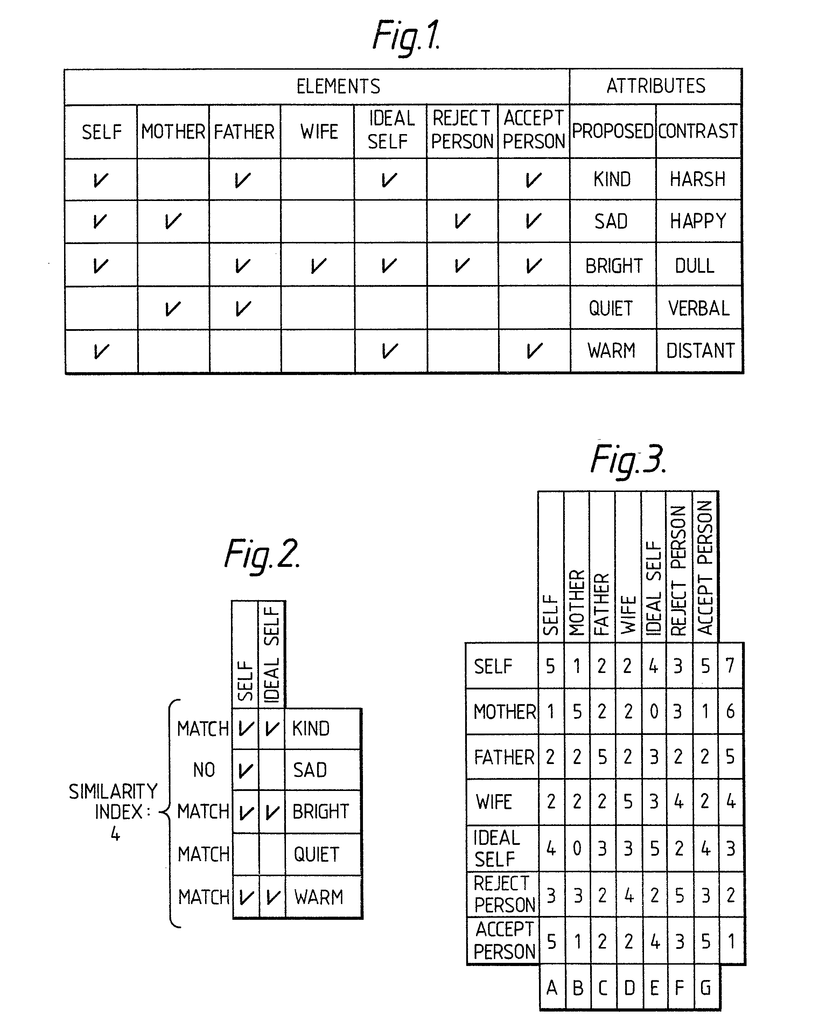

Referring now to the drawing, an example of the data manipulation shall be described within the context of a phenomelogical process which seeks to chart the subject's perception of his relationship with various family members. So identified, this data manipulation will be incorporated into analytical processes which will be described later. Using elements and attributes or constructs which have been judicially elicited from the subject by the clinician in order to fulfill the goal of his inquiry, a grid as illustrated in Figure 1 is constructed, upon which the subject's own assessment of not only his family members, but also himself and a virtual "ideal self" are recorded. Contrasts for all attributes are provided in order to help the subject communicate the meaning of each attribute name. Using the terms "self" and "ideal self" as elements in the study of interpersonal experience has been found to contribute to the strengths and predictability of the results. Elements or attributes may be added if they appear to be appropriate in the course of the clinical interview.

The first analytical step consists in defining a similarity index between each pair of elements which is defined as the number of times the paired elements share a common attribute or a lack of the same. An example of similarity indices as plotted determination is illustrated in Figure 2 which establishes the similarity index between the "self" and "ideal self" elements.

In a second and most important step plotting all the similarity index on a matrix which has all of the elements listed as both coordinates, as illustrated in Figure 3.

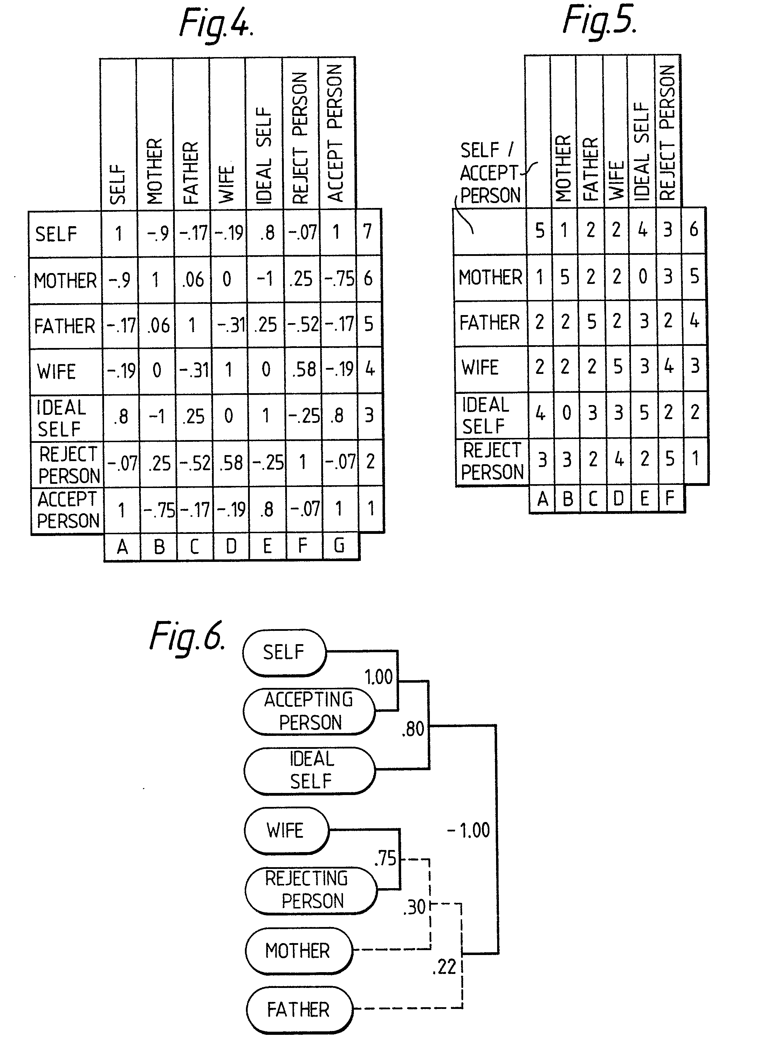

In a third and most important step, intercolumnar correlation indices are computed for each element, with every other element from the similarity indices, and recorded in a new matrix as illustrated in Figure 4. The indices of intercolumnar correlation are scaled from -1 to +1. Accordingly, the "mother"/"self" (B7) and "self"/"mother" (A6) intercolumnar correlation index of 0.9 corresponds to the degree of similarity between the respective data contained in columns A and B of Figure 3, in relation to the degrees of similarities between other columns. As can be observed at this stage of the proceedings, the lowest intercolumnar correlation index is found at B3 and E6 indicating a profound difference between the elements of "self" and "mother". The highest degree of correlation, on the other hand, is found between the elements "self" and "accepting person" at A1 and G7.

In order to grade further degrees of relationship between the elements and in a fourth manipulative step, the two most highly correlated elements, i.e. "self" and "accepting person", are clustered together and the similarity matrix of Figure 3 is collapsed to reflect the cluster as shown in Figure 5.

At this point, new intercolumnar correlation indices are computed based on the data of Figure 5 and plotted in a new collapsed matrix according to the process illustrated in Figure 4. The clustering process is continued until only two element entries are left in the intercolumnar correlation index matrix.

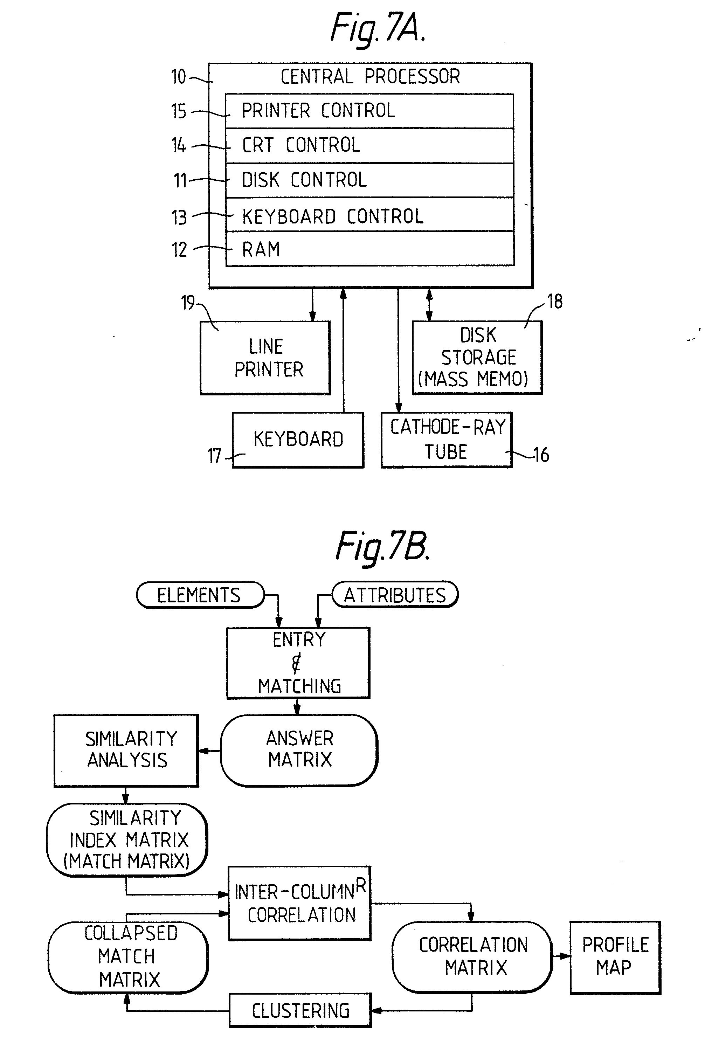

The results are then mapped in a cluster profile as illustrated in Figure 6. From such cluster profile, the clinician can determine how many of the subject's grids match a thesis or operational hypothesis. Past experience has shown that grids of at least 15 elements should be used in order to yield reasonably consistent results.

The block diagram of Figure 7A illustrates the architecture of one embodiment of hardware by means of which the present invention can be practiced.

This system comprises a microprocessor (CPU) 10 such as a Model 2810-Z80 manufactured by California Computer Systems of Sunnyvale, California, including a mass storage disc control unit 11, a RAM memory unit 12, a keyboard control unit 13, a video display control unit 14, and a printer or plotter control unit 15 as they are described in the Series 89000 Operator Manual published by California Computer Systems.

The peripheral modules include a cathode ray tube (CRT) 16 and keyboard (KB) 17 combination sold under Model UM200A and manufactured by Infinite, Inc., a disc memory module 18 such as model 6106 manufactured by Basf of Newport Beach, California, and a line printer 19 such as the type manufactured by Epson. The CPU 10 is programmed in accordance with the program listing appearing at the end of the description and which is written in the standard BASIC language.

It should be understood that similar programs can be easily implemented by those skilled in the art in any other applicable computer language.

Instructions 1010 to 1560 are used to define various parameters. Titles and legends to be displayed on the CRT 16 and line printer 19 are defined in instructions 2000 to 10,100. General instructions to the operator in the use of the apparatus are laid out in instructions 11,000 to 12,230. The routines necessary to enter the elements and their attributes are defined by instructions 12,300 to 65,000.

Instructions 100 to 120 establish a look-up list of significant correlations. The list is used during the print-out of the relationship map to emphasize high degrees of correlations. In accordance with instructions 17,000 to 17,070, any correlation which falls within the five first entries of the look-up list (i.e., with correlation degrees of 0.7545 or higher), are represented on the print-out by full lines, while spaced apart dots are used in forming lines corresponding to lesser degrees of correlation.

Instructions 6005 to 8040 cause the operator-generated data which has been stored in a disk file of the mass memory unit 18 to be read into an operational register to create a similarity index matrix in preparation for the computation of the correlation indices. Note that after each stage of the procedure the operator has the option of causing a print-out of the data by turning on the trace of the CRT 16. List of elements, attributes or constructs, similarity index matrix, correlation matrices, etc., can be preserved in printed form for backup and future analysis.

The intercolumnar correlation index is computed in the manner defined by instructions 11,110 to 13,030.

The preferred correlation algorithm used in the apparatus of this invention to derive the intercolumnar correlation index (COR) between two columns A and B of the similarity index matrix for N elements is:

$$COR = \frac{N \sum_i^N AB - \sum_i^N A \cdot \sum_i^N B}{COR_{max} \sqrt{(N \sum_i^N A^2 - \sum_i^N A \cdot \sum_i^N A)(N \sum_i^N B^2 - \sum_i^N B \cdot \sum_i^N B)}}$$

wherein COR max is the highest intercolumnar correlation index found between any two columns of the similarity index matrix. COR max may be omitted.

The present invention does not preclude the use of other types of algorithms for computing the correlation index between the various columns corresponding to the elements listed in the similarity index.

The printing of the similarity index matrix (match matrix) and correlation matrix is controlled by instructions 14,000 to 52,030. The elements clustering routines, the print-out of the results, and final profile map are defined in instructions 53,000 to 59,999. The flow diagram of the data processing is shown in Figure 7B.

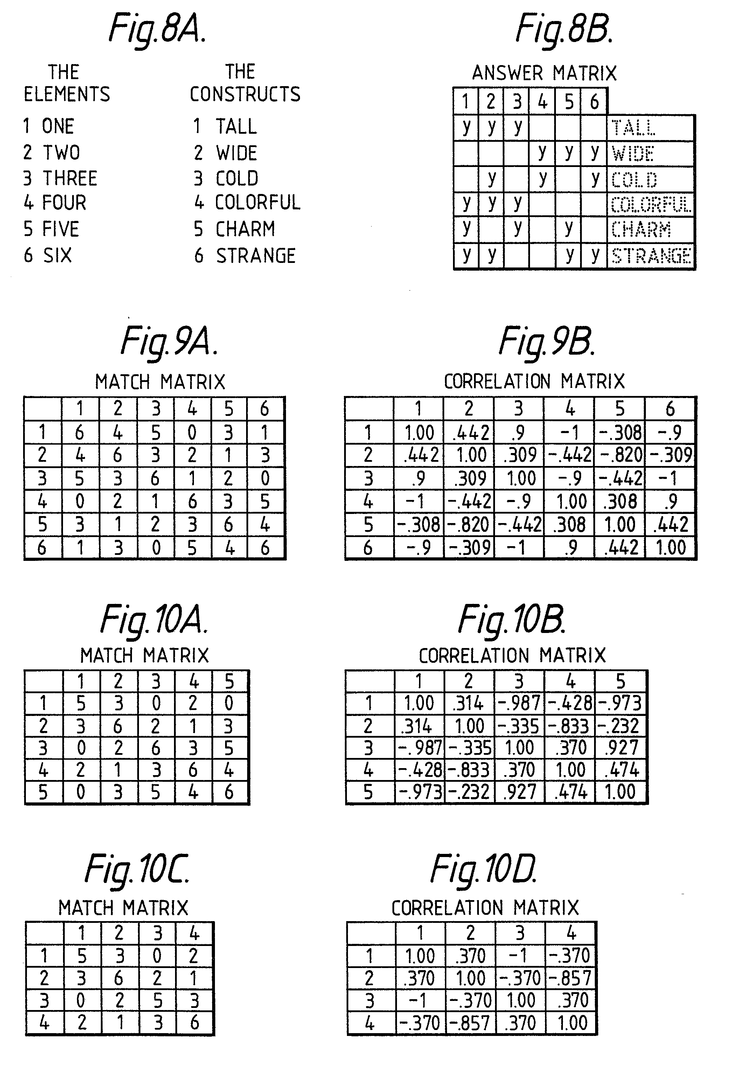

In order to further explain the applications of the program, a complete illustration of the print-outs obtained during the run of a concise yet complete clinical analysis is given in Figures 8 to 11. The elements and their attributes or constructs are listed in Figure 8A. Figure 8B illustrates the computer print-out of the answer matrix combining the elements and the constructs. Legends which do not appear in the computer-generated print-out are shown in dotted lines. The match (similarity index) matrix and intercolumnar correlation matrix, as they appear before clustering, are shown in Figures 9A and 9B.

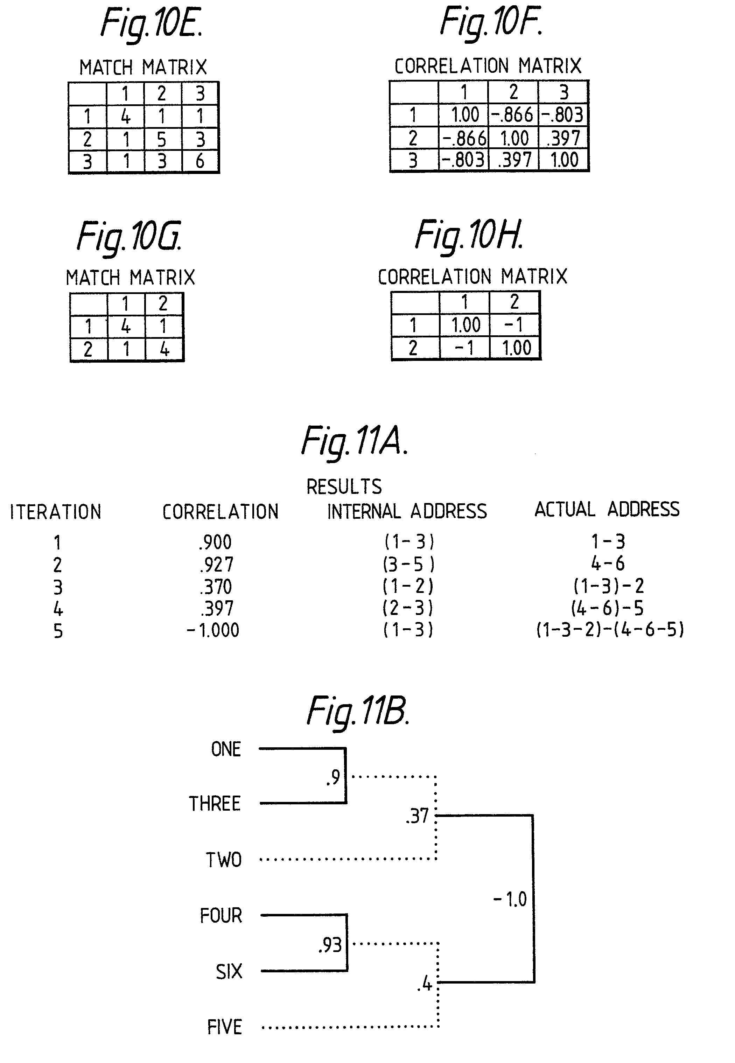

The four-step clustering process is shown in the four set of match and correlation matrices of Figures 10A through 10H. The final results and element profile map are given in Figures 11A and 11B.

The clustering sequences followed during the sample analysis is as follows: first elements one and three which in the first correlation matrix of Figure 9B show an intercolumnar correlation index of 0.9 are clustered together. Accordingly, the matrices given in Figures 10A and 10B apply to element clusters one/three (1), and element two(2), four(3), five(4) and six(5).

The clustering or combining of the two elements having the greatest correlation is achieved by taking the average of their individual similarity indexes. Thus the similarity index between a clustered element and another element is half the sum of the similarity indexes of the two components of the cluster and the other element, and the similarity index of a clustered element with itself is a quarter of the four similarity indexes of the two components with themselves and with each other. It should be noted that in the Figure 9A to Figure 10G sequence, averages have been rounded down to maintain the similarity indexes integral.

Next elements four and six, while showing an intercolumnar correlation index of 0.927 in Figure 10D, are clustered together. Thus, the matrices of Figures 10C and 10D apply to cluster one/three(1), element two (2), cluster four/six(3), and element five(4).

Cluster one/three and element 2 are then combined in the matrices of Figures 10E and 10F under address 1.

The last clustering combines cluster four/six and element 5 under address 2 of Figures 10G and 10G.

The table of Figure 11A is useful in correlating the elements to the computer of generated addresses used in printing the matrices.

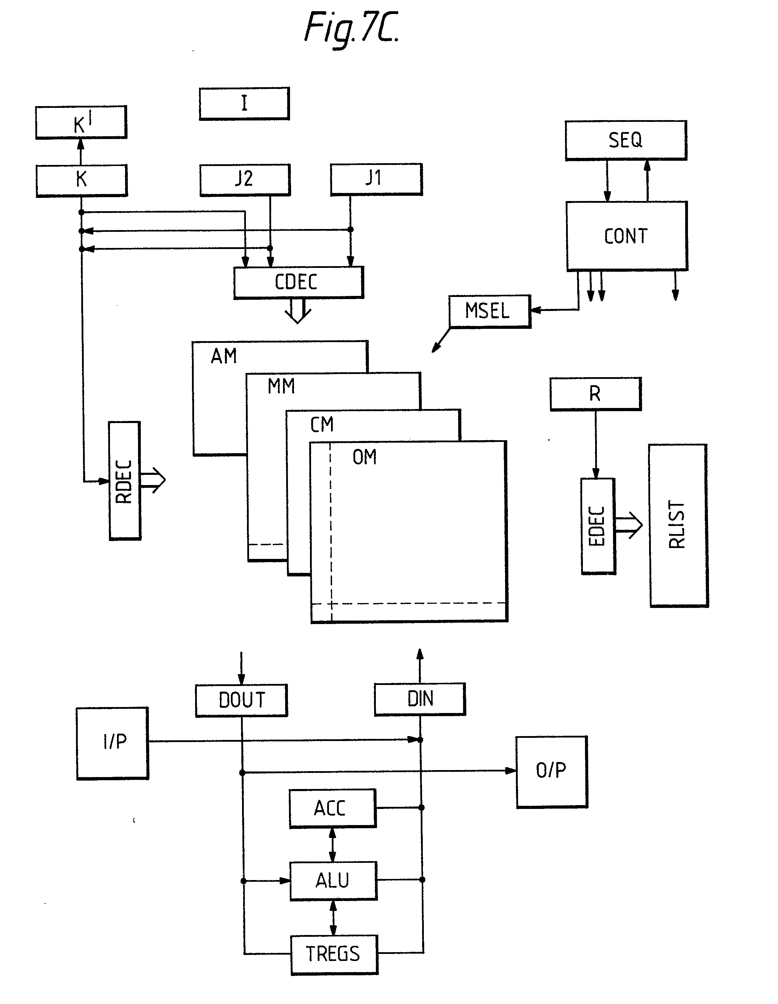

Turning now to Figure 7C there is shown a second embodiment of apparatus by means of which the analytical process previously described can be performed. Only the major functional features are shown, with many interconnections being omitted for clarity. The omitted details, although voluminous, are conventional. The various features will be discussed in the order in which they are used in operation.

The sequencing and overall control of the system is controlled by a sequencer SEQ, which is coupled to a control circuit unit CONT as shown. The sequence comprises 5 major stages, as follows:

I        data entry

II       match calculation

III    $\left\{ \begin{array}{l} \text{IIIA correlation} \\ \text{IIIB reduction} \end{array} \right.$

IV       result tabulation

V        data output.

As will be seen, stages I and V are basically conventional in character. Each stage of the sequence comprises a number of cycles or substages, and the proper sequencing is preferably achieved by means of conventional microprogramming techniques.

The system includes four main storage matrixes, as follows:

AM    answer matrix

MM    match matrix

CM    correlation matrix

OM    output matrix.

These four matrixes are addressed by means of a row decoder RDEC, a column decoder CDEC, and a matrix selector MSEL. The row and column decoders are controlled by means of three index registers J1, J2, and K, which are constructed as counters, and the matrix selector is controlled from the control circuitry CONT. The basic matrix size is square, the same for all matrices, but the AM has a limited number of rows, the MM has two additional rows, and the OM has an additional row and an additional column. Also, there is a results list store RLIST, addressed via a results list entry decoder EDEC from a results index register R. Each cell of the AM is capable of storing a single bit; each cell of the MM and CM is capable of storing a numeric value; each cell of the OM is capable of storing a numeric value or a symbol; and each cell in the RLIST is capable of storing a triplet of numeric values.

The system starts with the sequencer in stage I, data entry. An input unit I/P is operated to feed input data into the sytem. First, the number of elements is fed in, and stored in a size register I. Then, the answers for each attribute in turn are fed in sequentially, as a binary sequence (ticks and blanks, or yesses and noes), and stored in the AM. For this, the J1 and K index registers are used, each starting with value 1. As each binary answer is fed in, so the J1 register is incremented to point to the next column in the AM to select that column for the next answer. When the value in J1 equals the size in the size register I, J1 is reset to 1 and K is incremented to select the next row. This process continues until the complete answer matrix has been stored in AM. Stage II is then entered.

In stage II, the value in register K is transferred to a register K' for temporary storage, and registers J2 and J1 are set to 1 and 2 respectively and register K is set to 1. Register K is then incremented steadily up to the attribute number in K'. For each value of K, the entry in column J1 is read out from the AM into the matrix output register DOUT, and transferred to one of a set of temporary registers TREGS. The entry for column J2 is then read out into the register DOUT, and this and the stored value in the registers TREGS are then fed to an arithmetic and logic unit ALU, which determines the logical equivalence function. That is, the ALU generates a 1 if the two input values are the same, and a 0 if they are different. The output of the ALU is fed to an accumulator ACC, which thus counts the number of equivalences for the selected pair of columns. When the value of K has reached the value in K' the total number of equivalences is reached in ACC, and this is passed to the matrix input register DIN and the two values J1 and J2 are used to select the row and column of a cell in the MM in which this total is stored. The two values J1 and J2 are also interchanged to select the diagonally symmetric cell in which this value is also stored.

After each such cycle of the K register, the value in J1 is incremented by 1 until J1 reached the size I. At this point, the value of J2 is incremented by 1, and J1 is reset to 1 greater than J2. K cycles continue in this way until J2 equals 1 less than the size I, and J1 equals the size I. At this point, all match values between distinct pairs of columns of the answer matrix have been calculated. Stage II concludes with register J1 being incremented from 1 to I, and used to select both row and column in MM for each value, with the attribute value in K' being stored in each MM cell so selected. This completes the formation of the match matrix.

Stage IIIA is now entered. As a preliminary step, the size value I is stored in the K' register. Next follows a sequence of steps in which J1 is used to select each column in turn of the MM, and K is used to scan down that column. The match values for the column are read out and accumulated in the accumulator ACC, and the total is stored in the lower extension of MM - this lower extension

consists of two rows. Each column is then read out again, and this time TREGS and the ALU are used to calculate the square of each entry in the MM, and the accumulator ACC accumulates the sum of the squares of the match values of each column. This sum of squares is then multiplied by the size value I and held in ACC; then the simple sum of the column is read out from the first additional row, squared by the ALU, and subtracted from the contents of ACC. The resulting contents of ACC then have their square root found by the ALU, and the result is written back into the second additional row of MM.

The correlation matrix is now calculated. The procedure somewhat resembles the calculation of the match matrix, in that the two register J1 and J2 are used to select a pair of columns of the match matrix, K is used to scan down the two selected columns, and J1 and J2 are then used as column and row selectors, respectively, to store the resulting correlation value in the correlation matrix CM. It is however unecessary to fill more than one half of CM, or to fill its leading diagonal.

Considering the correlation function, it is evident that $\sum_{i}^{N} AB$ can be determined by scanning down the two rows and using the ALU in conjunction with TREGS and ACC. The remaining four functions of A and B are all available from the two extra rows of MM, and N is the size value I. Hence the ALU, in conjunction with the temporary registers TREGS used as working registers, calculates the correlation function. This is stored in CM as already noted.

When the calculation of the correlation matrix is completed, stage IIIB is entered, starting with the determination of the largest value in CM. The result is stored in the RLIST, and for this purpose, register R is initially set to 1. RLIST is a storage list having the same number of cells or entries as the number of rows and columns in CM. Each entry can store three values, the row and column of CM and the correlation in that row and column. The third value, the correlation value, is initially set to -2 for each entry.

To search the CM for the greatest value, J1 and J2 are used broadly as before, with J2 incrementing from 1 to I and J1 incrementing from (J2+1) to I for each value of J2. J2 and J1 are used to select the row and column respectively. For each combination of J1 and J2, the correlation value is read out from CM and compared with the value stored in the selected entry of RLIST. If the RLIST value is less than the value from CM, the RLIST value is replaced by the value from CM and the row and column values in the RLIST are replaced by J2 and J1. Hence when the incrementing of J1 and J2 is completed, the RLIST entry contains the greatest correlation value and its row and column location in CM.

Stage IIIB continues with the collapsing of the match matrix MM. To do this, the row and column values are read out from the RLIST and stored into J2 and J1. Using K, the two columns J1 and J2 are scanned together, with the ALU forming, for each row, the average of the two values in the J2 and J1 columns, and the resulting average being stored in the J2 column. J2 is then changed to J1 and J1 incremented by 1, and the two columns scaned down together by K with the contents of column J1 being transferred to column J2. J1 and J2 are then both incremented by 1, and the process is repeated until J1 equal the size I. The whole process of combining two lines of MM by averaging and then shifting the remaining lines is then repeated for the rows of MM.

Stage IIIB continues with the "housekeeping" operations of incrementing R by 1, in readiness for the next condensing, and decrementing the size value I to correspond to the size of the collapsed match matrix.

Stages IIIA and IIIB then alternate, repeating the above steps of calculating the correlation matrix, storing the greatest correlation value in the RLIST, and condensing the match matrix. This process continues until the size value reaches 2. The correlation matrix is calculated and the RLIST entry made, but stage III terminates at this point. Of course, the correlation value must be either 1 or -1 at this point, and the two column values J2 and J1 must be 1 and 2.

It will be realized that the initial loading of the RLIST with correlation values of -2 means that the first correlation value read out from the CM, i.e. row 1, column 2, will automatically be entered into the RLIST. This will subsequently be replaced by higher correlation values (if any) and their row and column numbers until the highest correlation value is reached. This value remains in the RLIST. It is thus unnecessary to provide special means for loading the first correlation value into the RLIST.

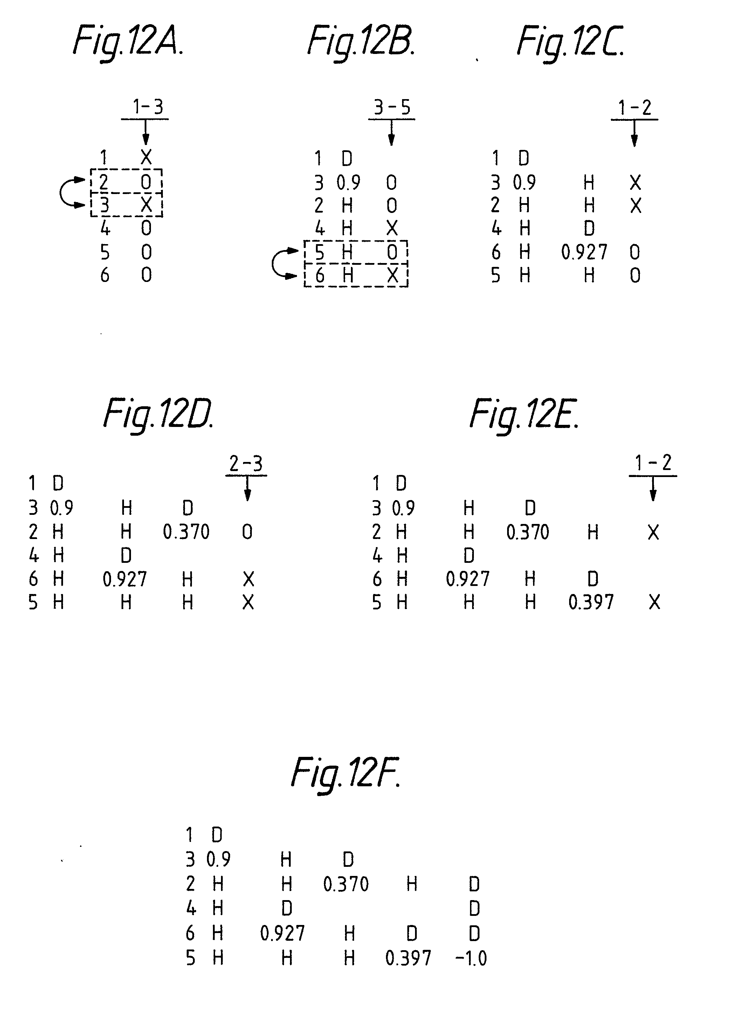

Stage IV is now entered. In this stage, the output matrix is generated, corresponding to the output layout shown in Figs. 6 and 11B. The process is illustrated by Figs. 12A to 12F. Broadly, the output matrix is constructed column by column, each column corresponding to an entry in the RLIST. The auxiliary left-hand column of the output matrix OM is initially filled with the element numbers in sequence. As each column is constructed, so a block of rows of the OM may be moved bodily up the OM if necessary, to bring together the two elements or clusters for that correlation, the column has those two elements or clusters linked with their correlation, and any remaining elements or clusters are carried on across that column.

As a preliminary step, the original size value is returned from K' to I. Register J1 is used to select the columns of OM in sequence, and is incremented in step with the incrementing of R, which is reset to 1 at the start of stage IV.

The first entry from the RLIST is read out, giving two element numbers and a correlation value. By counting down the elements in the OM, these two elements can be identified. If they have any intervening elements, the rows of the OM must be rearranged. For this, all rows between the two identified rows must be moved down, and the second identified row must be moved up to lie just beneath the first identified row. This rearrangement of rows can be achieved by interchanging the rows in pairs, using the auxiliary row at the bottom of the OM as temporary storage for a row being moved. Obviously several interchanges may be needed if the two identified rows are far apart. Figure 12A shows the list of element numbers, with X's marking the two identified rows for iteration no. 1.

The first column of the OM is then filled. The first of the two identified rows has the symbol D entered, and the second of the two identified rows has the correlation value (0.9) entered. The remaining rows have the symbol H entered.

The J1 and R registers are now incremented to select the second column and the result of the second iteration. The rules set out above are followed, but with elaborations. First, the J2 register is used to select the last completed column, so it is set to the value J1 - 1. Next the two element or cluster numbers from the RLIST are used to identify two rows in the OM, by counting down the preceding column, but blanks (if any) and D symbols are ignored. That is, the counting takes place only on correlation values and H symbols. In Figures 12B to 12E, the two X's indicate the identified rows. The internal element pair (I ADD) is given at the top of each of these figures, and o's indicate the rows which are eligible for the counting.

Once the two rows have been identified, a row rearrangement will be necessary if they are not "adjacent". This means if there are any intervening o's between the two X's. If there are, then the two with the lower X and any adjacent rows above it with blanks are treated as a block, and the next row up( which contains an o) and all rows above it up to but not including the row with the upper X are treated as a block, and these two blocks are interchanged. This bring the two rows, or clusters of rows, identified by X's together, i.e. with no intervening o's.

The current column of the OM can now be completed. The lower of the two identified rows has the correlation value entered into it, the upper of the two has the symbol D entered into it, and any intervening rows have D entered into them. Any other rows identified by o's have H entered into them.

This process continues until J1 and R reach the size value I.

Stage IV then continues with further processing of the OM, in three additional steps. First, each column in turn of the OM is scanned, starting at the left, to identify the block of rows containing the symbol D and the correlation value. Each row to the left of the row under consideration is then scanned similarly, to determine whether the identified block of rows contains only H's in that column. If it does, then the D's and the correlation value in the column under consideration are moved bodily leftwards, to the leftmost available column, and the column from which they are moved and any intervening columns have those rows filled with blanks apart from the row containing the correlation value, for which H's are entered to the right of the new location of the correlation value. Obviously, this process can conveniently be started with column 2.

The effect of this step is to "condense" the contents of the output matrix leftwards.

Second, each column is then scanned to identify any sequences of D's and a correlation value, starting with the leftmost column. Some columns may contain more than one such sequence; each such sequence is treated separately. When such a sequence is found, the number of D's is counted and divided by 2 (with rounding down for an odd number). If the result is greater than 0, then the correlation value is moved up by that many rows. If the correlation value is so moved up, its original location has a U symbol inserted. In addition, the line of symbols to the right of the original location of the correlation value (consisting of H's followed by a D) is moved up to the new row containing the correlation value, and the column containing the final D has additional D's entered in the rows over which that final D has moved (including the row from which that final D moved). Also, in the column under consideration, the topmost D of the sequence is left as a D, but any D's between that topmost D and the correlation value are changed to V symbols; and if the correlation value was moved up by more than 1 row, the rows intervening between its new row and the U which was put into its original row are filled with V's.

The effect of this step is to centre the correlation values on their clusters.

The third step is to scan the OM to read each correlation value in turn. As each correlation value is found, it is compared with a preset value. If it is less than the preset value, then the two sequences of symbols leading to it (from above left and below left) are traced in the OM, and the symbols H, U, D and V in these two sequences are replaced by the symbols h, u, d, and v respectively.

The effect of this step is to distinguish the symbol sequences leading to correlation values above and below the preset value.

This concludes stage IV, and stage V then follows. This final stage comprises the displaying of the contents of the output matrix OM on an output device O/P. For this, the element numbers or labels are displayed at the left-hand side, and the correlation values are displayed in their appropriate positions on a display matrix corresponding to the output matrix OM. The symbols H and V are displayed as horizontal and vertical segments, D and U as downward turning and upward turning segments, and h, v, d and u as similar broken segments.

It will of course be realized that many variations may be made in the apparatus of this invention. Thus, the processing has been described with reference to the embodiment of Figure 7C in a manner chosen to allow the details to be readily comprehended, but more complicated and quicker methods may be used.

The output matrix OM may be provided with a doubled number of rows, to allow for more effective interpolation of the position of the correlation values between adjacent elements.

It might also be convenient to construct the output matrix in parallel with the condensation of the match matrix, thus eliminating the need for the RLIST.

It will be seen from the numerical example considered previously that the codensing process results in the correlation values tending to increase as the condensation continues, so that the sequence in which the various correlation values are obtained is not necessarily apparent from the correlation values themselves. The second step of the processing of the output matrix may be omitted, so that this sequence remains apparent.

Further, it should be understood that the above-described examples are purely illustrative. In actual practice, much larger samples of elements and constructs should be used in order to yield reliable results.

It will be understood from the above description that by means of this invention a rapid yet reliable method device is provided to researchers, clinicians, educators, and decision makers, for:

mapping the structure of human experience;

understanding individual or group process information;

predicting outcomes of a problem from a correct perspective;

defining conflict and consequence between individuals or groups;

training individuals or groups; or

predicting individual or group behaviour.

There is further provided a unique relationship information between elements or constructs which cannot be derived from standard descriptions, correlational, or factorial methods, while allowing a diagnostician to understand a subject's experience from the subject's perspective and in the subject's own words.

Moreover, an analytical tool is produced which imposes little external structure on the subject, allowing him to express a very personal construction of experience, rather than demanding that the subject try to guess what the diagnostician or decision-maker wants.

PROGRAM LISTING

```
1000 ' INITIALIZE

1010 DEFINT I-N:WIDTH 255:DELAY=1500

1020 DIM ELEM$(42),CNST$(42),RESP$(42)

1030 DEF FNR=INT(RND*ICOL)+1


1500 ' SCREEN CONTROL

1510 ESC$=CHR$(27):BACK$=CHR$(8):RET$=CHR$(13):BEEP$=CHR$(7):NLL$=STRING$(3,0)

1515 CTLT$=CHR$(ASC("T")-&H40):CTLF$=CHR$(ASC("F")-&H40)

1520 CLRSCR$=ESC$+"*"+NLL$

1530 CLREOL$=ESC$+"T"+NLL$

1540 CLREOS$=ESC$+"Y"+NLL$

1550 HALF$=ESC$+")":FULL$=ESC$+"("

1560 DEF FNC$(X,Y)=ESC$+"="+CHR$(X+31)+CHR$(Y+31)


2000 CONDXTX$="D X T X : T H E  C O N S U L T A N T"

2010 CONELEM$="T H E   E L E M E N T S"

2020 CONCNST$="T H E   C O N S T R U C T S"

2030 CONCEXP$="T H E  C O N S T R U C T I O N  O F  E X P E R I E N C E"

2040 CONANAL$="T H E  A N A L Y S I S :  S T E P  O N E"


10000 PRINT CLRSCR$;

10010 PRINT FNC$(5,20);CONDXTX$

10020 PRINT FNC$(10,31);"(c) Copyright 1981"

10030 PRINT FNC$(12,30);"All rights reserved"

10040 PRINT FNC$(20,25);"Darrel Edwards & Susan Johnson"

10050 PRINT FNC$(21,34);"GRID LIMITED":GOSUB 50000

10100 IF K$=CTLF$ THEN ISKIP=1:GOTO 12300

11000 PRINT CLRSCR$;
```

```
11010 PRINT FNC$(1,20);CONDXTX$

11020 PRINT FNC$(4,1);HALF$;"I will give you several instructions

11030 PRINT:PRINT "When you see a '?', type the word(s)";

11035 PRINT " or number(s) being requested.":PRINT "Then press 'RETURN'.";

11040 GOSUB 50000

12000 PRINT FNC$(9,1);HALF$;"When you see only the cursor (solid square) ";

12005 PRINT "without a '?' press any key"

12010 PRINT "when you are ready to continue.":GOSUB 50000

12100 PRINT FNC$(12,1);HALF$;"If you make a mistake before you press";

12110 PRINT "'RETURN', backspace (press '<-')"

12120 PRINT "to the error and type the correct response.  If you have";

12130 PRINT "pressed 'RETURN',"

12140 PRINT "press 'CONTROL' and 'C' together, then type 'RUN' and press ";

12150 PRINT " 'RETURN'.":GOSUB 50000

12200 PRINT FNC$(20,20);"May I help you?";

12210 X=20:Y=37:GOSUB 50100:IF K=2 THEN SYSTEM

12220 PRINT CLRSCR$;FNC$(11,28);FULL$;CONELEM$:GOSUB 50000

12230 IF K$=CTLT$ THEN ITRACE=1:PRINT "Trace is on...";:
         For K=1 TO DELAY: NEXT ELSE ITRACE=0

12300 PRINT CLRSCR$;FNC$(5,28);FULL$;CONELEM$

12310 PRINT FNC$(10,1);HALF$;"PIease enter up to 42 elements. ";

12320 PRINT "Press 'RETURN' alone when all have been ":PRINT "entered."

12330 FOR I=0  TO 41:GOSUB 50200:IF KS$="" THEN 12350

12340 ELEM$ (I+1)=KS$:NEXT

12350 N=1:GOSUB 51000:ICOL=I:IF ISKIP THEN 12410 ELSE GOSUB 50300

12400 PRINT CLRSCR$;FNC$(11,26);FULL$;CONCNST$:GOSUB 50000
```

```
12401 IF K$=CTLT$ THEN ITRACE=1:PRINT "Trace is on...";:
          FOR K=1 TO DELAY:NEXT ELSE ITRACE=0

12410 PRINT CLRSCR$;FNC$(5,26);FULL$;CONCNST$;FNC$(10,1);

12420 PRINT "Have you prepared a list of constructs for this study?";

12430 X=10:Y=57:GOSUB 50100:IF K=2 THEN 12500

12440 PRINT FNC$(10,1);CLREOL$;HALF$;"Please enter up to 42 constructs.  ";

12450 PRINT "Press 'RETURN' alone when all have been":PRINT "entered."

12460 FOR I=0 TO 41:GOSUB 50200:IF KS$=" " THEN 12480

12470 CNST$(I+1)=KS$:NEXT

12480 N=2:GOSUB 51000:IROW=I:GOTO 12720

12500 PRINT FNC$(10,1);CLREOL$;HALF$;

12510 PRINT "You can develop a set of personal constructs for consideration."

12520 PRINT:
          PRINT "I would like you to consider ways you think about the elements"

12530 PRINT "you have selected to study.":PRINT FULL$

12540 INPUT; "How many constructs would you like to generate";IROW

12550 IF IROW>1 AND IROW<43 THEN 12600

12560 PRINT:PRINT:PRINT FULL$;"Invalid input.  ";

12570 FOR I=1 TO DELAY:NEXT:GOTO 12500

12600 X=RND(-7):FOR I=1 TO IROW:I1=FNR

12610 I2=FNR:IF I2=I1 THEN 12610

12620 I3=FNR:IF I3=I1 OR I3=I2 THEN 12620

12630 IF ITRACE THEN GOSUB 60000

12640 PRINT FNC$(10,1);CLREOS$;FULL$;"Consider the following three elements:"

12650 PRINT:PRINT HALF$;SPC(5);"1.  ";ELEM$(I1):PRINT SPC(5);"2.  ";ELEM$(I2)

12660 PRINT SPC(5);"3.   ";ELEM$(I3);FULL$:PRINT:PRINT

12670 PRINT "How are two of these elements alike that makes them different"
```

```
12680 PRINT "from the third in some important way you think about them?":PRINT

12690 PRINT "What is the number of the element which is unlike the other two?";

12695 X=20:Y=67:X$="123":Y$=" ":GOSUB 50105:PRINT:PRINT

12696 ON K GOTO 12697,12698,12700

12697 SWAP I1,I2

12698 SWAP I2,I3

12700 PRINT "What word or phrase describes from your own point of view how ";

12705 PRINT ELEM$(I1):PRINT "and ";ELEM$(I2);

12710 LINE INPUT " are alike in some important way?  ";CNST$(I):NEXT

12720 IF ISKIP THEN 12810 ELSE GOSUB 50300

12800 PRINT CLRSCR$;FNC$(11,10);FULL$;CONCEXP$:GOSUB 50000

12801 IF K$=CTLT$ THEN ITRACE=1:PRINT "Trace is on ...";:
          FOR K=1 TO DELAY:NEXT ELSE ITRACE=0

12810 PRINT CLRSCR$;FNC$(5,10);FULL$;CONCEXP$;FNC$(10,1);HALF$;

12820 PRINT "I will now present your constructs one at a time.  For each, I"

12830 PRINT "will present the elements one at a time.":PRINT

12840 PRINT "If the construct describes the element, answer 'Y'.  If the"

12850 PRINT "construct does not describe the element well, in your judge-"

12860 PRINT "ment, answer 'N'."

12900 I=1:J=1:RESP$(I)="001"+STRING$(ICOL,".")

12910 RESP$(I)="001"+STRING$(ICOL,".")

12915 PRINT FNC$(17,10);CLREOS$;HALF$;"Does:        ";FULL$;CNST$(I)

12920 PRINT FNC$(18,10);CLREOL$;HALF$;"Describe:    ";FULL$;ELEM$(J);"?"

12930 X=18:Y=40:X$="YNP"

12935 Y$=HALF$+"(' "+FULL$+"Y"+HALF$+"', ' "+FULL$+"N"+HALF$+"', or ' "+
          FULL$+"P"+HALF$+"' for previous pair.)"

12940 GOSUB 50105:ON K GOTO 12950, 12955, 12960
```

```
12950 MID$(RESP$(I),J+3,1)="Y":GOTO 12980

12955 MID$(RESP$(I),J+3,1)=".":GOTO 12980

12960 IF J>1 THEN J=J-1:GOTO 12920

12970 IF I>1 THEN I=I-1:J=ICOL:GOTO 12910 ELSE 12930

12980 IF J=ICOL THEN J=1 ELSE J=J+1:GOTO 12920

12990 IF I<IROW THEN I=I+1:J=1:GOTO 12910

13000 PRINT CLRSCR$;FNC$(11,18);FULL$;CONANAL$;FNC$(24,1);:
        IF ISKIP=0 THEN GOSUB 50000

13005 OPEN "O",1,"GRIDDATA":WRITE #1,ICOL,IROW," "

13010 FOR I=1 TO ICOL:PRINT #1,ELEM$(I):NEXT

13020 FOR I=1 TO IROW:PRINT #1,CNST$(I):NEXT

13030 FOR I=1 TO IROW:PRINT #1,RESP$(I):NEXT

13040 CLOSE:RUN "GRIDCALC"

49999 END

50000 K$=INKEY$:PRINT FNC$(24,26);HALF$;"Press any key to continue: ";FULL$;

50010 K$=INKEY$:IF K$=" " THEN 50010 ELSE PRINT FNC$(24,26);CLREOL$;:RETURN

50100 X$="YN":Y$=HALF$+"(Answer ' "+FULL$+"Y"+HALF$+
            " ' or ' "+FULL$+"N"+HALF$+" ')"

50105 PRINT FNC$(X,Y);CLREOL$;"   ";Y$;FULL$;FNC$(X,Y);

50110 K$=INKEY$:IF K$=" " THEN 50110

50120 K=INSTR(X$,K$):IF K=0 THEN PRINT BEEP$;:GOTO 50110 ELSE PRINT K$;

50130 K$=INKEY$:IF K$=" " THEN 50130

50140 IF K$=BACK$ THEN PRINT K$;:GOTO 50110

50150 IF K$<>RET$ THEN PRINT BEEP$;:GOTO 50130 ELSE RETURN

50200 KS$=" ":X=I MOD 11 + 14:Y=(I\11)*20+1:PRINT FNC$(X,Y)FULL$;

50210 PRINT USING "##? ";I+1;"PRINT STRING$(15,"_");FNC$(X,Y+4);

50220 K$=INKEY$:IF K$=" " THEN 50220
```

```
50230 IF LEN(KS$)=0 AND (K$=BACK$ OR K$=" " OR K$=RET$ AND I<3) THEN 50290

50240 IF K$=BACK$ THEN PRINT K$;"_";K$;:KS$=LEFT$(KS$,LEN(KS$)-1):GOTO 50220

50250 IF K$=RET$ THEN 50270

50260 IF LEN(KS$)=15 OR K$<" " OR K$>"~" THEN 50290 ELSE
        KS$=KS$+K$:PRINT K$;:GOTO 50220

50265 X=I MOD 11 + 14:Y=(I\11)*20+1

50270 PRINT FNC$(X,Y);HALF$;SPACE$(19);:IF KS$=" " THEN RETURN

50280 PRINT FNC$(X,Y);:PRINT USING "##. &";I+1,KS$;:RETURN

50290 PRINT BEEP$;:GOTO 50220


50300 PRINT FNC$(24,68);FULL$;"Thank you.  ";:FOR K=1 TO DELAY:NEXT:RETURN

51000 PRINT FNC$(11,1);CLREOL$;FNC$(10,1);CLREOL$;FULL$;

51010 PRINT "Thank you.  Now, please review your list."

51020 PRINT "Do you want to change any of it?";

51030 X=11:Y=35:GOSUB 50100:IF K=2 THEN RETURN

51040 PRINT FNC$(11,1);CLREOL$;FNC$(10,1);CLREOL$;FULL$;

51050 PRINT "What action do you desire?";

51060 X=10:Y=29:X$="ACDN"

51070 Y$="("+FULL$+"A"+HALF$+"=Add, "+FULL$+"C"+HALF$+"=Change, "+
        FULL$+"D"+HALF$+"=Delete, "+FULL$+"N"+HALF$+"=No change)"

51080 GOSUB 50105:ON K GOTO 51100,51200,51300,51400

51085 PRINT FNC$(11,1);CLREOL$;BEEP$;"Invalid action.  ":FOR K=1 TO DELAY:NEXT

51090 PRINT FNC$(10,1);CLREOL$;FULL$;"Thank you.";FNC$(11,1);CLREOL$;

51095 PRINT "Do you require any more changes?";:GOTO 51030


51100 IF I=42 THEN 51085

51110 GOSUB 50200:IF KS$=" " THEN 51090 ELSE I=I+1

51120 IF N=1 THEN ELEM$(I)=KS$ ELSE CNST$(I)=KS$

51130 GOTO 51090
```

```
51200 PRINT FNC$(11,1);CLREOL$;FNC$(10,1);CLREOL$;FULL$;

51210 INPUT;"What line number would you like to change";L

51220 IF L<1 OR L>I THEN 51085 ELSE L=L-1:SWAP L,I

51230 GOSUB 50200:IF KS$=" " THEN 51230

51240 IF N=1 THEN ELEM$(I+1)=KS$ ELSE CNST$(I+1)=KS$

51250 SWAP L,I:GOTO 51090


51300 PRINT FNC$(11,1);CLREOL$;FNC$(10,1);CLREOL$;FULL$;

51310 INPUT;"What line number would you like to delete";L

51320 IF L<1 OR L>I THEN 51085

51330 IF N=2 THEN 51370

51340 ELEM$(L)=" ":FOR I=L-1 TO I-1:KS$=ELEM$(I+2)

51350 SWAP ELEM$(I+1),ELEM$(I+2):GOSUB 50265:NEXT:I=I-1:GOTO 51090


51370 CNST$(L)=" ":FOR I=L-1 TO I-1:KS$=CNST$(I+2)

51380 SWAP  CNST$(I+1),CNST$(I+2):GOSUB 50265:NEXT:I=I-1:GOTO 51090


51400 GOTO 51090


59999 RETURN


60000 IF I=1 THEN LPRINT CHR$(12);"  COLUMNS USED FOR CONSTRUCT PREPARATION"

60010 IF I=1 THEN LPRINT "  ";STRING$(38,"-"):ITB=(42-ICOL)\2

60020 T$=STRING$(ICOL,"."):MID$(T$I1,1)-"O":MID$(T$,I2,1)="O":MID$(T$,I3,1)="O"

60030 LPRINT TAB(ITB);T$:RETURN


65000 PRINT "SAVING 'GRID.BAS' ":SAVE "GRID":RUN
```

```
100 WIDTH 255:DEFINT I-N:IEOF=0:SUBCT=0:SKPCT=0

110 DATA .9969,.9500,.8783,.8114,.7545,.7067,
         .6664,.6319,.6021,.5760,.5529,.5324,
         .5139,.4973,.4821,.4683,.4555,.4438,
         .4329,.4227,.3809,.3494,.3246,.3044

120 DIM SIGCOR(24):FOR I=1 TO 24:READ SIGCOR(I):NEXT

130 ROWS=0:COLS=0:ICOL=0:MI$="####":MR$="###.##"

140 AST$="*":BLANK$=" ":CCT=0:HYPHEN$="-":PGCT=0:SKPCT=0:SUBCT=0:TOL=.00001

170 DEF FNCHOP$(X)=MID$(STR$(X),2)

175 DEF FNC$(X,Y)=CHR$(27)+"="+CHR$(X+31)+CHR$(Y+31)

180 DEF FNNBR(T$)=VAL(MID$(T$,INSTR(T$,":")+1))

200 OPEN "I",1,"GRIDDATA"

210 INPUT #1,COLS,ROWS,NM$:ICOL=COLS+3

220 DIM ELEM$(COLS)

230 FOR I=1 TO COLS:LINE INPUT #1,ELEM$(I):NEXT

240 FOR I=1 TO ROWS:LINE INPUT #1,NM$:NEXT

6005 DIM GRID$(ROWS,COLS),MATRIX(COLS,COLS),ACT(COLS),CORREG(COLS,COLS)

6007 DIM 0$(COLS+100),LTYPE$(COLS),LFROM(COLS),LSOURCE(COLS),LTO(COLS),
         LDEST(COLS),LPPOS(COLS),COR(COLS)

6010 PROD=ROWS*COLS:CMAX=ICOL-3:QUOT=PROD/CMAX

6020 IF (PROD MOD CMAX)>0 THEN QUOT=QUOT+1

6030 GOTO 6200

6100 GOTO 6500

6200 IF IEOF=1 THEN 20200

6210 K=0:I=1:J=1:CCR=0

6500 CCR=CCR+1:IF CCR>QUOT THEN 9000

7000 IF EOF(1) THEN IEOF=1:GOTO 6200

7030 LINE INPUT #1,T$:ID$=LEFT$(T$,3):T$=MID$(T$,4)

7040 IF CCR=1 THEN OLDID$=ID$:SPCT=0
```

```
7050 IF OLDID$=ID$ THEN 8000

7060 LPRINT:LPRINT:LPRINT "Cards read for subject (";OLDID$;"), ";

7070 LPRINT QUOT-CCR;" cards remaining, subject skipped."

8000 CCT=CCT+1

8010 FOR K=1 TO CMAX

8020 GRID$(I,J)=MID$(T$,K,1):J=J+1:IF J<=COLS THEN 8040

8030 IF I+1>ROWS THEN 6100

8035 J=1:I=I+1

8040 NEXT:K=0:GOTO 6100

9000 J=0

9100 J=J+1:PRINT FNC$(24,1);COLS-J;" ";:IF J>COLS-1 THEN 9200

9110 L=J

9115 L=L+1:PRINTFNC$(24,8);COLS-L+1;" ";:IF L>COLS THEN 9100

9120 CNT=0:I=0

9130 I=I+1:IF I>ROWS THEN 9160

9140 IF GRID$(I,J)=GRID$(I,L) THEN CNT=CNT+1

9150 GOTO 9130

9160 MATRIX(J,L)=CNT:MATRIX(L,J)=CNT:GOTO 9115

9200 SUBCT=SUBCT +1

9210 ACTCT=99

10000 FOR I=1 TO COLS:ACT(I)=I:MARTIX(I,I)=ROWS:NEXT

10005 FOR NUM=COLS TO 2 STEP -1:IF NUM=COLS THEN SPCT=0

10007 IF TRACE=0 AND NUM<COLS THEN 11110

10010 HFLAG=1:GOSUB 50000

11000 FOR I=1 TO NUM
```

```
11010 IF LINENO>57 THEN GOSUB 50000

11020 LPRINT:LPRINT USING " ## ";I;

11025 FOR J=1 TO NUM:LPRINT USING " ##";MATRIX(I,J);:
         IF J=18 OR J=36 THEN LPRINT:LPRINT TAB(5);:LINENO=LINENO+1

11030 NEXT:LPRINT:LINENO=LINENO+2:NEXT

11110 LESS=NUM-1:XNUM=NUM:FOR JJ=1 TO NUM:CORREG(JJ,JJ)=1:NEXT

12000 J=0:GOTO 12200

12100 GOTO 12220

12200 J=J+1:PRINT FNC$(24,1);LESS-J+1;"  ";:IF J>LESS THEN 14000

12210 L=J

12220 L=L+1:PRINT FNC$(24,8);NUM-L+1;"  ";:IF L>NUM THEN 12200

12230 SUMA=0:SUMB=0:SUMAB=0:SUMA2=0:SUMB2=0:COR=0

12240 FOR I=1 TO NUM

12250 A=MATRIX(I,J):B=MATRIX(I,L):SUMAB=SUMAB+A*B

12260 SUMA=SUMA+A:SUMB=SUMB+B:SUMA2=SUMA2+A*A:SUMB2=SUMB2+B*B

12270 NEXT

13000 TNUM=XNUM*SUMAB-SUMA*SUMB

13010 TDEM=(XNUM*SUMA2-SUMA*SUMA)*(XNUM*SUMB2-SUMB*SUMB)

13020 IF TDEM>TOL THEN COR=TNUM/(SQR(TDEM)) ELSE COR=0

13030 CORREG(J,L)=COR:CORREG(L,J)=COR:GOTO 12100

14000 '

14005 IF TRACE=0 AND NUM<COLS THEN 14100

14010 HFLAG=2:SPCT=0:GOSUB 50000

14020 FOR I=1 TO NUM

14030 IF LINENO>57 THEN GOSUB 50000

14035 LPRINT:LPRINT USING " ##   ";I;
```

```
14040 FOR J=1 TO NUM:
         IF J=10 OR J=19 OR J=28 OR J=37
              THEN LPRINT:LPRINT TAB(6);:LINENO=LINENO+1

14045 LPRINT USING "####.###";CORREG(I,J);:NEXT:LPRINT

14050 LINENO=LINENO+2:NEXT


14100 ICNT=1:JCNT=2:X=CORREG(1,2)

15000 FOR I=1 TO LESS:FOR J=I+1 TO NUM

15010 Y=CORREG(I,J)

15020 IF Y>X THEN X=Y:ICNT=I:JCNT=J

15030 NEXT:NEXT


15040 IF ACTCT=99 THEN HFLAG=3:SPCT=0:GOSUB 50000


16000 ACTCT=ACTCT+1

16010 IF ACT(ICNT)>50 THEN W$=O$(ACT(ICNT)):P$="("+W$+")"
         ELSE W$=FNCHOP$(ACT(ICNT)):P$=W$

16020 IF ACT(JCNT)>50
         THEN O$(ACTCT)=W$+"-"+O$(ACT(JCNT)):P$=P$+"  -  ("+O$(ACT(JCNT))+")" ELSE
         O$(ACTCT)=W$+"-"+FNCHOP$(ACT(JCNT)):
         P$=P$+"  -  "+FNCHOP$(ACT(JCNT))

10630 ACTIJ$="("+FNCHOP$(ICNT)+"-"+FNCHOP$(JCNT)+")":SIGIND$=" "

17000 IF NUM<3 THEN 17100

17010 NX=NUM-2

17020 IF 21<=NX AND NX<=24 THEN NX=20

17030 IF 25<=NX AND NX<=29 THEN NX=21

17040 IF 30<=NX AND NX<=34 THEN NX=22

17050 IF 35<=NX AND NX<=39 THEN NX=23

17060 IF 40<=NX AND NX<=43 THEN NX=24

17070 IF X=>SIGCOR(NX) THEN SIGIND$="*"
```

```
17100 IL=ACTCT-99:LSOURCE(IL)=ACT(ICNT):LDEST(IL)=ACT(JCNT):COR(IL)=X:
      IF ABS(X)>.704 THEN LTYPE$(IL)="*" ELSE LTYPE$(IL)=" "

17102 IF   (ACT(ICNT)<100  AND ACT(JCNT)<100)
         OR (ACT(ICNT)>99   AND ACT(JCNT)>99 ) THEN
               IF ACT(ICNT)>ACT(JCNT)
                      THEN SWAP LSOURCE(IL),LDEST(IL):GOTO 17110
                      ELSE GOTO 17110

17104 IF ACT(ICNT)<100 AND ACT(JCNT)>99 THEN
      SWAP LSOURCE(IL),LDEST(IL)

17110 IF  (LSOURCE)<100 OR LDEST(IL)<100) AND SGN(COR(IL))>-1 THEN
      LPPOS(IL)=FIX((1-X)*50)+20
```

```
18000 IF LINENO>57 THEN GOSUB 50000

18018 LPRINT:LPRINT USING "   ##   ##.###!   &";
      ACTCT-99,X,SIGIND$,ACTIJ$;

18020 LPRINT TAB(36);P$:LINENO=LINENO+2:ACT(ICNT)=ACTCT

18030 FOR I=JCNT TO NUM-1:ACT(I)=ACT(I+1):NEXT

18050 IF TRACE THEN
      PRINT ACTCT-99,X,P$

19000 FOR I=1 TO NUM

19010 MATRIX(I,ICNT)=(MATRIX(I,ICNT)+MATRIX(I,JCNT))\2

19020 MATRIX(ICNT,I)=MATRIX(I,ICNT):NEXT

19030 FOR I=1 TO NUM:FOR J=JCNT TO LESS

19040 MATRIX(I,J)=MATRIX(I,J+1)

19050 NEXT:NEXT

20000 FOR I=1 TO NUM:FOR J=JCNT TO LESS

20010 MATRIX(J,I)=MATRIX(J+1,I)

20020 NEXT:NEXT:NEXT:GOTO 6200

20200 LPRINT CHR$(12);

20210 LPRINT "END OF FILE, SUBJECTS =";SUBCT,"CARDS =";CCT,

20220 LPRINT "SKIPPED =";SKPCT

20230 LPRINT CHR$(12);

20240 IF TRACE THEN GOSUB 55000

29000 GOTO 56000

50000 PGCT=PGCT+1:SPCT=SPCT+1:LINENO=1

50010 LPRINT CHR$(12);"SUBJECT(";FNCHOP$(SUBCT);") - ID(";ID$;
      ")";TAB(66);"PAGE ";FNCHOP$(HFLAG);".";FNCHOP$(SPCT);
      "   (";FNCHOP$(PGCT);")"

51000 IF HFLAG<>1 THEN 52000

51010 LPRINT:LPRINT TAB(20);"** MATCH MATRIX **"

51020 FOR IX=1 TO NUM:IF IX=1 OR IX=19 OR IX=37 THEN LPRINT:LPRINT TAB(5);
```

```
51030 LPRINT USING "  ##";IX;:NEXT:LPRINT:LPRINT:RETURN

52000 IF HFLAG<>2 THEN 53000

52010 LPRINT:LPRINT TAB(20);"** CORRELATION MATRIX **"

52020 FOR IX=1 TO NUM:IF IX=1 OR IX=10 OR IX=19 OR IX=28 OR IX=37 THEN
       LPRINT:LPRINT TAB(4);

52030 LPRINT USING "      ##";IX;:NEXT:LPRINT:LPRINT:RETURN

53000 IF HFLAG<>3 THEN RETURN

53010 LPRINT:LPRINT TAB(20);"** RESULTS **":LPRINT

53020 LPRINT "ITERATION CORRELATION  INTERNAL   ACTUAL ADDRESSES"

53030 LPRINT TAB(23);"ADDRESSES":RETURN

55000 LPRINT:LPRINT

55010 LPRINT "IL  ACTCT  LFROM  LSOURCE  LTO  LDEST  COR  LTYPE$  LPPOS  O$"

55020 LPRINT STRING$(70,"-")

55030 MSK$ ="##  ###  ###  ###  ###  ###  ##.###    !    ###   &"

55040 FOR II=1 TO IL

55050 LPRINT USING MSK$;II,II+99,LFROM(II),LSOURCE(II),
       LTO(II),LDEST(II),COR(II),LTYPE$(II),LPPOS(II),O$(II+99)

55060 NEXT:RETURN

56000 I=1:LN=1

56010 IP=I:IF I>1 AND LSOURCE(I)<100 THEN LN=LN+2

56030 IF LSOURCE(I)<100 THEN LFROM(I)=LN:LN=LN+2 ELSE
       J=LSOURCE(I)-99:
       LFROM(I)=(LFROM(J)+LTO(J))\2:
       GOSUB 56330

56040 IF LDEST(I)<100 THEN LTO(I)=LN:LN=LN+2 ELSE
       J=LDEST(I)-99:
       LTO(I)=(LFROM(J)+LTO(J))\2:
       GOSUB 56330

56045 IF LFROM(I)>LTO(I) THEN SWAP LFROM(I),LTO(I):SWAP LSOURCE(I),LDEST(I)

56050 IF I=IL THEN 56390 ELSE I=I+1
```

0067057

```
56100 IF LSOURCE(I)<>IP+99 THEN 56200

56110 IF LDEST(I)<100 THEN 56010

56120 IF LFROM(LDEST(I)-99) THEN 56010
```

```
56130 I=LDEST(I)-99:GOTO 56300

56200 IF LDEST(I)<>IP+99 THEN 56050

56300 IF LSOURCE(I)<100 THEN 56010

56310 IF LFROM(LSOURCE(I)-99) THEN 56010

56320 I=LSOURCE(I)-99:GOTO 56300

56330 IF LPPOS(I)<LPPOS(J)+5 THEN LPPOS(I)=LPPOS(J)+5

56340 IF SGN(COR(I))>-1 THEN LPPOS=FIX((1-COR(I))*50)+20 ELSE LPPOS=0

56350 IF LPPOS(I)<LPPOS THEN LPPOS(I)=LPPOS

56360 RETURN

56390 IF TRACE THEN GOSUB 55000

57000 DOTS$=" ":FOR I=1 TO 8:DOTS$=DOTS$+".  .  .  .  .":NEXT:LN=LN-2:DIM LN$(LN+1)

57100 FOR L=1 TO LN:LN$=" "

57110 FOR I=1 TO IL:IF L<LFROM(I) OR L>LTO(I) THEN 57600

57120 IF LEN(LN$)<LPPOS(I) THEN LN$=LN$+SPACE$(LPPOS(I)-LEN(LN$))

57200 IF L>LFROM(I) THEN 57300

57210 IF LSOURCE(I)<100 THEN
         LFROM=15:MID$(LN$,1,15)=ELEM$(LSOURCE(I)) ELSE
         LFROM=LPPOS(LSOURCE(I)-99)

57230 GOTO 57510

57300 IF L<>LTO(I)-1 THEN 57400

57305 S=SGN(COR(I)):IF X=0 THEN S=1

57310 T=(INT(ABS(COR(I))*100+.5)+.1)*S:T$="  "+STR$(T/100):
         T$=MID$(T$,INSTR(T$,".")-2,5):MID$(LN$,LPPOS(I)-5,5)=T$:GOTO 57410

57400 IF L=LTO(I) THEN 57500

57410 IF LTYPE$(I)=" " THEN C$="." ELSE IF L<>LFROM(I) THEN C$="|" ELSE C$=" "

57420 MID$(LN$,LPPOS(I),1)=C$:GOTO 57600
```

```
57500 IF LDEST(I)<100 THEN
         LFROM=15:MID$(LN$,1,15)=ELEM$(LDEST(I)) ELSE
         LFROM=LPPOS(LDEST(I)-99)

57510 LGTH=LPPOS(I)-LFROM
```

```
57520 IF LTYPE$(I)=" " THEN MID$(LN$,LFROM+1,LGTH)=MID$(DOTS$,LFROM+1,LGTH)
                       ELSE MID$(LN$,LFROM+1,LGTH)=STRING$(LGTH,"_")

57530 GOTO 57410

57600 NEXT:LN$(L)=LN$:NEXT

58000 '

58010 PRINT CHR$(27);"*";CHR$(0);CHR$(0);:FOR I=1 TO LN

58020 IF I<25 THEN PRINT FNC$(I,1);LN$(I);

58025 LPRINT LN$(I):NEXT:LPRINT CHR$(12);:IB=24

58030 PRINT FNC$(24,80);

58040 K$=INKEY$:IF K$=" " THEN 58040

58050 IF K$="E" THEN END

58060 IF K$="X" THEN SYSTEM

58070 IF K$="P" THEN 58010

58100 IF K$<>CHR$(11) THEN 58200

58110 IF IB<LN THEN IB=IB+2:
          PRINT:PRINT LN$(IB-1):PRINT LN$(IB);:GOTO 58030

58200 IF K$<>CHR$(10) THEN 58040

58210 IF IB<25 THEN 58040

58220 IB=IB-2:PRINT CHR$(27);"*";CHR$(0);CHR$(0);

58230 FOR I=1 TO 24:K$=INKEY$:IF K$=CHR$(10) AND IB>24 THEN 58220

58240 PRINT FNC$(I,1);LN$(IB-24+I);:NEXT:GOTO 58030

59999 END

65000 PRINT "SAVING 'GRIDCALC.BAS' ":SAVE "GRIDCALC"
```

## CLAIMS

1. Apparatus for determining relationships between elements in accordance with shared attributes, each element possessing a respective selection of the attributes, characterized by: similarity means for determining and storing (10, 12 or MM), for each possible pair of elements, a similarity index value dependent on the attributes common to the two elements; correlation means for determining and storing (10, 12 or ALU, CM), for each possible pair of elements, a correlation value indicative of the correlation between the similarity index values of the first element with the whole set of elements and the similarity index values of the second element with the whole set of elements; condensing means (10, 12 or ALU, RLIST) for condensing the set of similarity index values by clustering the most highly correlated elements into a single element; and control means (12 or SEQ, CONT) for causing the correlation means and the condensing means to operate repeatedly in alteration, whereby a sequence of successive clusters is generated (14, 15 or RLIST).

2. Apparatus according to claim 1, characterized in that the condensing means clusters the pair of elements having the highest correlation.

3. Apparatus according to claim 1 or 2, characterized in that the condensing means averages the similarity index values of the elements being clustered to for the similarity index values of the resulting single element.

4. Apparatus according to claim 1, 2 or 3, characterized in that the correlation means calculates the correlations according to the formula:

$$C = \frac{N \sum_i^N AB - \sum_i^N A \cdot \sum_i^N B}{\sqrt{(N \sum_i^N A^2 - \sum_i^N A \cdot \sum_i^N A)(N \sum_i^N B^2 - \sum_i^N B \cdot \sum_i^N B)}}$$

wherein N is the number of elements and A and B are the contents of said two columns.

5. Apparatus according to any preceding claim, characterized in that the control means causes the correlation means and the condensing means to operate alternately until only two elements result.

6. Apparatus according to any preceding claim, characterized by output determining means comprising a matrix store (10, 12 or OM) and means for generating, in the matrix store, a tree representing the sequence of successive clusters.

7.   Apparatus according to claim 6, characterized by output means (16, 19 or O/P) for displaying the contents of the matrix store.

8.   Apparatus according to any preceding claim, characterized by a storage matrix (10, 12 or AM) for storing, for each element, the selection of attributes which that element possesses.

9.   Apparatus according to any preceding claim, characterized by including a program routine for iteratively guiding its operator in selecting said elements and said attributes.

10.   Apparatus for the analysis of clinically gathered data to be used for thought processing, organizational structuring or decision-making processing, organizational structuring or decision-making purposes,          for mapping the degree of relationship between a plurality of elements in function of their shared attributes, which comprises:-
     (a) means for each pair of any two elements, for calculating a similarity index value in function of the relationship between said two elements and each of a series of attributes;
     (b) means for translating each of said similarity index values into a correlation index value in function of the various similarity index values between each of said two elements and all other elements;

　　　(b) means for repeatedly grouping elements in function of their respective correlation index values and, for each said group, calculating a similarity index value and a correlation index value in relation to each other element or group thereof; and

　　　(d) means for displaying said elements and group thereof in function of their correlation index value.

## Fig.1.

| ELEMENTS | | | | | | | ATTRIBUTES | |
|---|---|---|---|---|---|---|---|---|
| SELF | MOTHER | FATHER | WIFE | IDEAL SELF | REJECT PERSON | ACCEPT PERSON | PROPOSED | CONTRAST |
| ✓ | | ✓ | | ✓ | | ✓ | KIND | HARSH |
| ✓ | ✓ | | | | ✓ | ✓ | SAD | HAPPY |
| ✓ | | ✓ | ✓ | ✓ | ✓ | ✓ | BRIGHT | DULL |
| | ✓ | ✓ | | | | | QUIET | VERBAL |
| ✓ | | | | ✓ | | ✓ | WARM | DISTANT |

## Fig.2.

| | SELF | IDEAL SELF | |
|---|---|---|---|
| MATCH | ✓ | ✓ | KIND |
| NO | ✓ | | SAD |
| MATCH | ✓ | ✓ | BRIGHT |
| MATCH | | | QUIET |
| MATCH | ✓ | ✓ | WARM |

SIMILARITY INDEX: 4

## Fig.3.

| | SELF | MOTHER | FATHER | WIFE | IDEAL SELF | REJECT PERSON | ACCEPT PERSON | |
|---|---|---|---|---|---|---|---|---|
| SELF | 5 | 1 | 2 | 2 | 4 | 3 | 5 | 7 |
| MOTHER | 1 | 5 | 2 | 2 | 0 | 3 | 1 | 6 |
| FATHER | 2 | 2 | 5 | 2 | 3 | 2 | 2 | 5 |
| WIFE | 2 | 2 | 2 | 5 | 3 | 4 | 2 | 4 |
| IDEAL SELF | 4 | 0 | 3 | 3 | 5 | 2 | 4 | 3 |
| REJECT PERSON | 3 | 3 | 2 | 4 | 2 | 5 | 3 | 2 |
| ACCEPT PERSON | 5 | 1 | 2 | 2 | 4 | 3 | 5 | 1 |
| | A | B | C | D | E | F | G | |

## Fig.4.

| | SELF | MOTHER | FATHER | WIFE | IDEAL SELF | REJECT PERSON | ACCEPT PERSON | |
|---|---|---|---|---|---|---|---|---|
| SELF | 1 | -.9 | -.17 | -.19 | .8 | -.07 | 1 | 7 |
| MOTHER | -.9 | 1 | .06 | 0 | -1 | .25 | -.75 | 6 |
| FATHER | -.17 | .06 | 1 | -.31 | .25 | -.52 | -.17 | 5 |
| WIFE | -.19 | 0 | -.31 | 1 | 0 | .58 | -.19 | 4 |
| IDEAL SELF | .8 | -1 | .25 | 0 | 1 | -.25 | .8 | 3 |
| REJECT PERSON | -.07 | .25 | -.52 | .58 | -.25 | 1 | -.07 | 2 |
| ACCEPT PERSON | 1 | -.75 | -.17 | -.19 | .8 | -.07 | 1 | 1 |
| | A | B | C | D | E | F | G | |

## Fig.5.

| SELF / ACCEPT PERSON | | MOTHER | FATHER | WIFE | IDEAL SELF | REJECT PERSON | |
|---|---|---|---|---|---|---|---|
| | 5 | 1 | 2 | 2 | 4 | 3 | 6 |
| MOTHER | 1 | 5 | 2 | 2 | 0 | 3 | 5 |
| FATHER | 2 | 2 | 5 | 2 | 3 | 2 | 4 |
| WIFE | 2 | 2 | 2 | 5 | 3 | 4 | 3 |
| IDEAL SELF | 4 | 0 | 3 | 3 | 5 | 2 | 2 |
| REJECT PERSON | 3 | 3 | 2 | 4 | 2 | 5 | 1 |
| | A | B | C | D | E | F | |

## Fig.6.

## Fig.7A.

## Fig.7B.

## Fig.7C.

## Fig.8A.

| THE ELEMENTS | THE CONSTRUCTS |
|---|---|
| 1 ONE | 1 TALL |
| 2 TWO | 2 WIDE |
| 3 THREE | 3 COLD |
| 4 FOUR | 4 COLORFUL |
| 5 FIVE | 5 CHARM |
| 6 SIX | 6 STRANGE |

## Fig.8B.

ANSWER MATRIX

| 1 | 2 | 3 | 4 | 5 | 6 | |
|---|---|---|---|---|---|---|
| y | y | y | | | | TALL |
| | | | y | y | y | WIDE |
| | y | | y | | y | COLD |
| y | y | y | | | | COLORFUL |
| y | | y | | y | | CHARM |
| y | y | | | y | y | STRANGE |

## Fig.9A.

MATCH MATRIX

| | 1 | 2 | 3 | 4 | 5 | 6 |
|---|---|---|---|---|---|---|
| 1 | 6 | 4 | 5 | 0 | 3 | 1 |
| 2 | 4 | 6 | 3 | 2 | 1 | 3 |
| 3 | 5 | 3 | 6 | 1 | 2 | 0 |
| 4 | 0 | 2 | 1 | 6 | 3 | 5 |
| 5 | 3 | 1 | 2 | 3 | 6 | 4 |
| 6 | 1 | 3 | 0 | 5 | 4 | 6 |

## Fig.9B.

CORRELATION MATRIX

| | 1 | 2 | 3 | 4 | 5 | 6 |
|---|---|---|---|---|---|---|
| 1 | 1.00 | .442 | .9 | −1 | −.308 | −.9 |
| 2 | .442 | 1.00 | .309 | −.442 | −.820 | −.309 |
| 3 | .9 | .309 | 1.00 | −.9 | −.442 | −1 |
| 4 | −1 | −.442 | −.9 | 1.00 | .308 | .9 |
| 5 | −.308 | −.820 | −.442 | .308 | 1.00 | .442 |
| 6 | −.9 | −.309 | −1 | .9 | .442 | 1.00 |

## Fig.10A.

MATCH MATRIX

| | 1 | 2 | 3 | 4 | 5 |
|---|---|---|---|---|---|
| 1 | 5 | 3 | 0 | 2 | 0 |
| 2 | 3 | 6 | 2 | 1 | 3 |
| 3 | 0 | 2 | 6 | 3 | 5 |
| 4 | 2 | 1 | 3 | 6 | 4 |
| 5 | 0 | 3 | 5 | 4 | 6 |

## Fig.10B.

CORRELATION MATRIX

| | 1 | 2 | 3 | 4 | 5 |
|---|---|---|---|---|---|
| 1 | 1.00 | .314 | −.987 | −.428 | −.973 |
| 2 | .314 | 1.00 | −.335 | −.833 | −.232 |
| 3 | −.987 | −.335 | 1.00 | .370 | .927 |
| 4 | −.428 | −.833 | .370 | 1.00 | .474 |
| 5 | −.973 | −.232 | .927 | .474 | 1.00 |

## Fig.10C.

MATCH MATRIX

| | 1 | 2 | 3 | 4 |
|---|---|---|---|---|
| 1 | 5 | 3 | 0 | 2 |
| 2 | 3 | 6 | 2 | 1 |
| 3 | 0 | 2 | 5 | 3 |
| 4 | 2 | 1 | 3 | 6 |

## Fig.10D.

CORRELATION MATRIX

| | 1 | 2 | 3 | 4 |
|---|---|---|---|---|
| 1 | 1.00 | .370 | −1 | −.370 |
| 2 | .370 | 1.00 | −.370 | −.857 |
| 3 | −1 | −.370 | 1.00 | .370 |
| 4 | −.370 | −.857 | .370 | 1.00 |

## Fig.10E.

MATCH MATRIX

|   | 1 | 2 | 3 |
|---|---|---|---|
| 1 | 4 | 1 | 1 |
| 2 | 1 | 5 | 3 |
| 3 | 1 | 3 | 6 |

## Fig.10F.

CORRELATION MATRIX

|   | 1 | 2 | 3 |
|---|---|---|---|
| 1 | 1.00 | -.866 | -.803 |
| 2 | -.866 | 1.00 | .397 |
| 3 | -.803 | .397 | 1.00 |

## Fig.10G.

MATCH MATRIX

|   | 1 | 2 |
|---|---|---|
| 1 | 4 | 1 |
| 2 | 1 | 4 |

## Fig.10H.

CORRELATION MATRIX

|   | 1 | 2 |
|---|---|---|
| 1 | 1.00 | -1 |
| 2 | -1 | 1.00 |

## Fig.11A.

| ITERATION | CORRELATION | RESULTS INTERNAL ADDRESS | ACTUAL ADDRESS |
|---|---|---|---|
| 1 | .900 | (1-3) | 1-3 |
| 2 | .927 | (3-5) | 4-6 |
| 3 | .370 | (1-2) | (1-3)-2 |
| 4 | .397 | (2-3) | (4-6)-5 |
| 5 | -1.000 | (1-3) | (1-3-2)-(4-6-5) |

## Fig.11B.

## Fig.12A.

```
                    1-3
                     ↓
        1    X
        2    0
        3    X
        4    0
        5    0
        6    0
```

## Fig.12B.

```
                        3-5
                         ↓
        1  D
        3  0.9      0
        2  H        0
        4  H        X
        5  H        0
        6  H        X
```

## Fig.12C.

```
                        1-2
                         ↓
        1  D
        3  0.9     H     X
        2  H       H     X
        4  H       D
        6  H       0.927  0
        5  H       H     0
```

## Fig.12D.

```
                              2-3
                               ↓
    1  D
    3  0.9    H      D
    2  H      H      0.370  0
    4  H      D
    6  H      0.927  H      X
    5  H      H      H      X
```

## Fig.12E.

```
                              1-2
                               ↓
    1  D
    3  0.9    H      D
    2  H      H      0.370  H     X
    4  H      D
    6  H      0.927  H      D
    5  H      H      H      0.397  X
```

## Fig.12F.

```
    1  D
    3  0.9     H      D
    2  H       H      0.370  H     D
    4  H       D             D
    6  H       0.927  H      D     D
    5  H       H      H      0.397  -1.0
```